# EUROPEAN PATENT APPLICATION

(11) **EP 2 732 988 A1**
(43) Date of publication of application: **21.05.2014**
(21) Application number: 13193284.0
(22) Date of filing: 18.11.2013
(51) Int. Cl.: B60C 11/24, B60C 23/04

(54) **Vehicle tire and brake inspection tool**

(30) Priority: 19.11.2012 US 201261727852 P; 14.11.2013 US 201314080279
(71) Applicant: Ateq Corporation, Livonia, Michigan 48150 (US)
(72) Inventor: Mouchet, Jacques, Livonia, MI Michigan 48150 (US)
(74) Representative: Notaro, Giancarlo

(57) **Abstract**

Improved vehicle inspection systems and inspection methods for use in measuring predetermined conditions of vehicle equipment are disclosed. Hand-held tire pressure monitoring system (TPMS) tools for communicating and transferring data between the tool and an onboard vehicle TPMS is in electronic communication with at least one measurement accessory device for measuring a preselected vehicle equipment condition are disclosed herein. The measurement accessory device may be a tread depth measuring device and a brake pad thickness measuring device.

## Description

### Technical field

The present invention is in the general field of inspecting parameters of vehicle equipment, for example, tires and brake systems.

### Background

In 2007, the United States implemented federal laws requiring most passenger vehicles to include a tire pressure monitoring system (TPMS) to monitor and alert drivers of low tire pressure which degrades vehicle efficiency and performance. Continued use of a tire with low tire pressure can cause premature wear of the tire and in the worst case, catastrophic tire failure.

One TPMS system is so-called direct TPMS. In direct TPMS, a tire sensor is installed in the wheels of each pneumatic vehicle tire, often on the valve stem. These sensors are capable of monitoring several conditions of the tire including: tire air/nitrogen pressure, tire temperature, wheel rotation speed and other conditions. The sensors themselves include a specific sensor identification code (ID) and are capable of receiving external electronic signals from an electronic control unit or module (ECU) in the vehicle, and in response, sending electronic signals wirelessly from inside the wheel to the vehicle ECU, which typically is connected to alert indications in the instrument panel in the interior of the passenger compartment. If a wheel sensor senses a tire pressure or other condition in a tire that is above or below a predetermined level, the sensor transmits a signal that is received by the ECU, and the ECU triggers an audio/visual indication to alert the driver to the condition. The sensors are similarly capable of receiving external electronic signals from an external TPMS monitoring tool and sending the electronic signals wirelessly from inside the wheel to the external tool.

Depending on the type of TPMS tool, basic TPMS tools will activate the sensor to force it to transmit internal sensor information, internally process the data, and send a signal or signals to the ECU to "reset" or reprogram the ECU to account for the different location of existing sensors or new sensors. An example of such a tool is the ATEQ model VT15 manufactured by ATEQ, assignee of the present invention. More sophisticated TPMS tools include additional features to decode the signals transmitted by the sensors to the ECU. This may include reading and displaying the information on a tool visual display for the service garage technician. This decoding may include, for example, the sensor data on tire air pressure, tire air temperature, tire rotational speed, remaining sensor battery life or condition depending on the type of sensor or TPMS tool. The TPMS tool stores the information in memory, processes the received information according to preprogrammed instructions in the tool, and transmits a signal or signals to the ECU to reprogram the ECU for the changed wheel and sensor event. An example of such a tool is the ATEQ model VT55 manufactured by ATEQ Corporation, assignee of the present invention. The decoding of information is useful as a diagnostic tool to identify the particular tire condition to better troubleshoot problems. An easy example would be to specifically identify which sensor is transmitting an alert condition or identify a sensor that has stopped working due to a dead battery or damage.

Vehicle or tire sales and service centers typically conduct an inspection of important vehicle parameters or conditions when a user brings the vehicle to the sales or service center for service. It is very common for service centers to check the vehicle tires for proper air pressure, tire tread wear or damage, whether the vehicle brake pads should be replaced, and whether critical vehicle fluid levels are too low. These needs can be amplified when a large volume of vehicles need to be serviced or inspected, such as commercial or industrial truck fleets. Trucks have several tires, often times with multiple tires on each side of an axle. The volume of tires and vehicles in a fleet to be service can greatly increase the time and manpower required to measure the tire pressure, tire tread depth, brake pad thickness, and other important vehicle measurements when done through separate steps, using separate tools.

These are critical vehicle parameters and a source of potential sales of products or services by the service facility to customers. If one or more of these tire and brake measurements indicate service or replacement is needed, it is advantageous for the vehicle owner and the service center to conduct this work right away to avoid a potentially unsafe vehicle condition, for example low tread life which could produce poor performance in wet driving conditions.

### Brief summary

The present invention provides examples of improvements to existing TPMS tools including additional components, features, functions, accessories and methods of operation described below.

It would be advantageous to provide a tool which could quickly and accurately measure vehicle TPMS tire air pressure, tire tread depth and the thickness of the vehicle brake pads and report those measurements to a technician to quickly identify the condition of the tires and brake systems.

It would be further advantageous to transfer these tire and brake pad measurements to a single, mobile and/or hand-held device for visual display and observation by a technician for quick identification of the measurements.

It would further be advantageous that in addition to tire and brake pad measurements, the tool could quickly and accurately measure the fluid levels of important vehicle fluids and report those measurements to a technician.

It would further be advantageous to transfer the measured tire and brake system data to a central location, for example a personal computer, so the information can be organized, stored and printed by a technician for the vehicle owner/customer. The stored data could be used for historical reference, for example, to identify potential problems or unusual wear, identify required service on the vehicle's next visit to the service center or for notifying customers that service is recommended in the near future. Other uses of the data would be beneficial to the service facility and/or the vehicle owner.

In one example, a vehicle inspection system for use in measuring predetermined conditions of vehicle equipment comprises a portable tool having a housing and defining a front face, the tool having a power source, a programmable processor, a memory, and software stored in the memory and antennas for wirelessly sending and receiving electronic data to at least one of a distant tire pressure monitoring system (TPMS) sensor connected to a vehicle wheel. The inspection system further comprises at least one measurement accessory device for measuring a preselected vehicle equipment condition, where the accessory device is in electronic communication with the portable tool for transmission of data measured by the accessory device to the portable tool.

In another example a method of taking a plurality of measurements on preselected components of a vehicle is disclosed. The method comprises the steps of activating an inspection tool, selecting one of a plurality of vehicle component parameters to be measured, activating a measuring tool or accessory to measure the selected vehicle component parameter, and measuring the parameter and transmit the measured data to the inspection tool for observation by a technician.

Variations in these and other aspects of the disclosure will be described in additional detail hereafter.

### Brief description of the drawings

The description herein makes reference to the accompanying drawings wherein like reference numerals refer to like parts throughout the several views, and wherein:
Figure 1 is a perspective view of an example of a prior art inspection tool principally used TPMS measurements;
Figure 2 is a partial perspective end view of the example inspection tool in Figure 1;
Figure 3 is a schematic, partially cut-away illustration of an example of an inspection tool of the present invention;
Figure 4 is a schematic drawing of an inspection tool in Fig. 3 useable with an exemplary tire tread depth measurement accessory;
Figure 5A is a schematic partial sectional view of a first example of the inspection tread depth measurement accessory tool of Figure 4 in a retracted position;
Figure 5B is a schematic partial sectional view of the tread depth accessory tool of Figure 5A in an extended position;
Figure 6 is a schematic partial sectional view of a second example of the tread depth accessory tool of Figure 4;
Figure 7 is a schematic side view of an example a brake pad thickness measurement device usable with the inspection tool shown in Figure 3;
Figure 8 is a schematic top view of the exemplary brake pad thickness device shown in Figure 5 in an exemplary application for use with a disc brake pad;
Figure 9 is a schematic flow chart of an example of a method for inspecting a tire or brake pad using the inspection tool and respective tire or brake pad accessories; and
Figure 10 is a schematic diagram of the exemplary inspection tool in electronic and digital communication with other equipment for wireless communication.

### Detailed description of examples of the invention

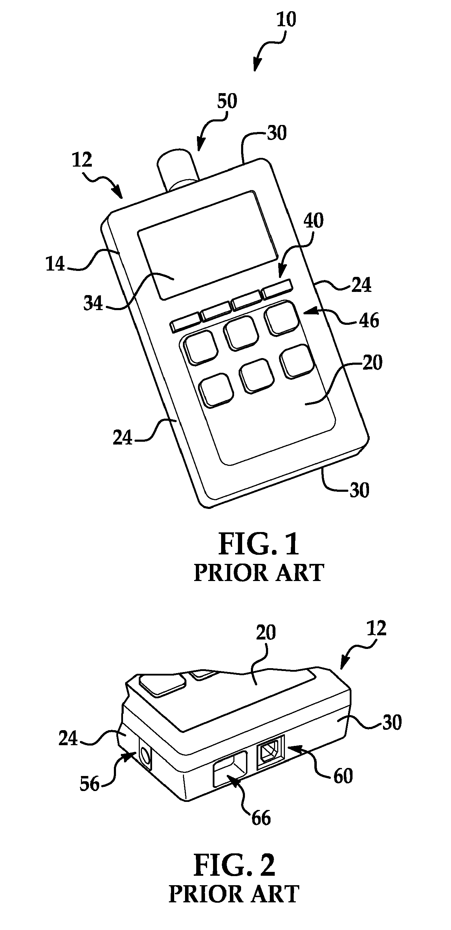

Referring to Figures 1-10 examples of an inspection tool useful with vehicle tires and brake pad systems, and methods, are illustrated and described below.

Referring to Figures 1 and 2, an example of a prior art tire inspection tool 12 primarily for use in measuring tire pressures from tires including a tire pressure monitoring system (TPMS) is illustrated. In past devices, such tire inspection tools had a primary and limited function of communicating with the tire sensors to measure tire pressure and other tire specific data and the vehicle electronic communication unit (ECU) relating to the TPMS system.

Referring to Figure 1, the exemplary inspection device and system 10 includes a tool 12. Tool 12 is preferably a hand-held, mobile device including a housing 14 having front face 20, sides 24 and top and bottom ends 30. In the example, front face 20 includes a visual liquid crystal display (LCD) panel 34, several indicator lights 40, a pushbutton keypad 46 and an antenna 50. In the example, antenna 50 is a low frequency (LF) antenna. Other antennas for transmitting and receiving other frequencies and signals known by those skilled in the art may be used. It is understood that the housing 14, front face 20, visual display 34 can take different configurations, forms and functions as known by those skilled in the field. In less sophisticated forms of tools 12, a visual display may be eliminated and the data transferred to another device having a visual display as further explained below.

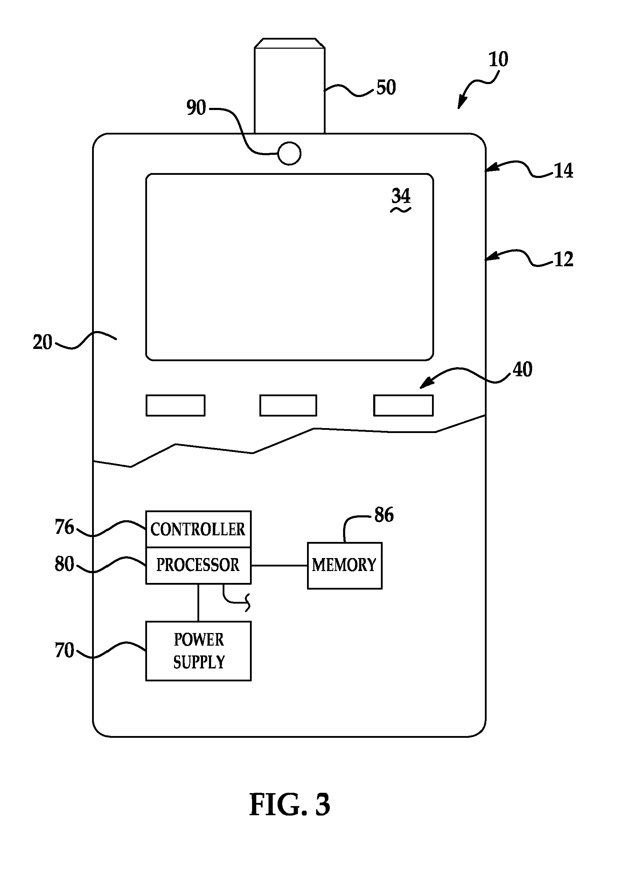

In a typical application, the conventional TPMS tool 12 is used to send, receive and process electronic data with a TPMS system installed in a passenger vehicle (not shown) by sending and receiving modulated or pulsed (continuous) wave signals. Whenever the information transmitted by a TPMS system is coded under the form of a modulated signal, for example Manchester ASK, or other communication coding protocols known in the art, the TPMS tool uses its microprocessor 80 and preprogrammed software and data memory storage device 86 (shown in Fig. 3) to extract useful information, for example pressure, temperature, battery status and sensor identifier and display it for the benefit of the tool user.

Referring to Figure 2, exemplary tool 12 may include an AC or DC power connection, a first data communication port 60 (example shown as a USB port) and a second data communication port 66 (example shown as a RJ45 port for connection to a OBDII port on passenger vehicles) for sending and receiving electronic signals and data from peripheral devices (described below) or to the vehicle ECU through a wired connection 56. Other communication ports and connections known by those skilled in the art may be used. Other aspects and features of the tool 12 are found in U.S. Patent Application Serial No. 13/659,009 assigned to the assignee of the present invention.

Referring to Figure 3, exemplary inspection device and system 10 includes a tool 12 having an internal power supply 70 connected to a controller 76, a microprocessor 80 and a memory storage device 86. Power supply 70 may be conventional batteries, a rechargeable battery or other internal power means known by those skilled in the art. Where components in conventional devices may be used in the present invention, the same indicator numbers are used.

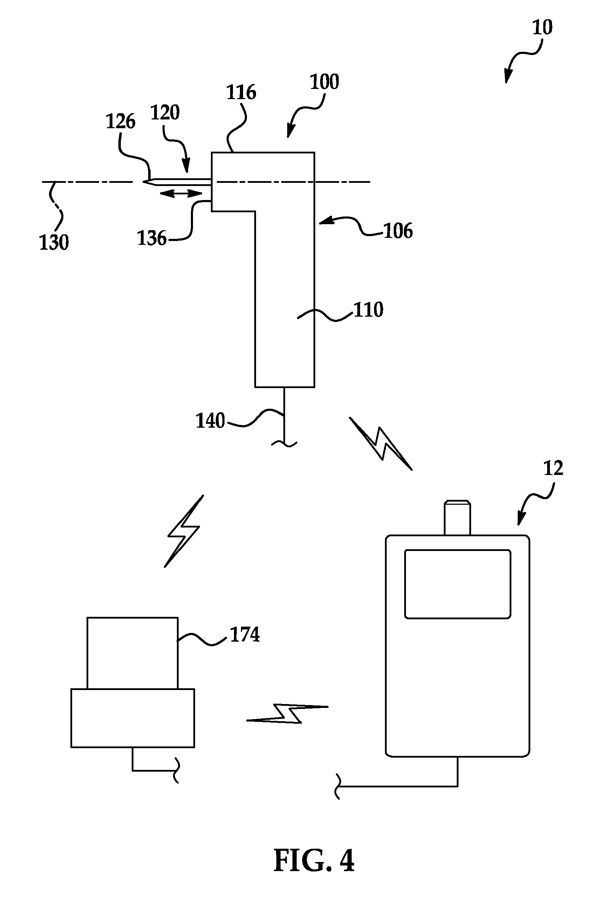

Referring to Figures 3 and 4, an example of a tool 12 includes an optical infrared scanner or camera 90 for use in directly scanning information or data from a TPMS tire sensor itself (not shown), the sensor packaging (stickers, labels, bar codes, QR codes, data sheets etc.) or other indicia on tires, brake systems or the vehicle, for example the vehicle identification number (VIN), license plate, or other vehicle indicia. This scanned information can be used to reference known features or historical data on the vehicle or proper communication protocols to use. Further details of this feature can be found in U.S. Patent Application Serial No. 13/659,009 assigned to the assignee of the present invention.

In conventional TPMS tool systems and applications, the tool 12 sends a signal to activate/trigger or awaken a TPMS sensor installed inside a pneumatic tire or wheel (not shown) and the sensor responds and transmits a data signal to the tool 12. This signal fundamentally typically requires the sensor's specific ID number for use by the tool 12. Other information may be transmitted by the sensor, for example tire pressure, temperature and revolutions and other data known by those skilled in the art depending on the sophistication of the sensor. The tool 12 can further include absolute temperature and pressure compensation features to take into account the varying atmospheric pressure and temperature where the vehicle is located. This ensures more accurate adjustments in tire air pressure by the technician so as to keep the tire within the acceptable ranges monitored by the onboard TPMS to reduce alert signals by the TPMS to the vehicle driver.

Referring to Figures 4-9, inspection system 10 using tool 12 may be equipped with two exemplary accessories for measuring the tire tread depth and the thickness of brake pads. These two vehicle parameters are important to the everyday operation of a vehicle and are often automatically measured whenever a vehicle enters a vehicle service facility, for example a tire sales and repair facility or mechanic/service garage. In the example of Figure 4, a tire tread depth measurement device 100 is shown. In the example, tread depth device 100 includes a housing 106 having a hand grip 110 and a head portion 116.

In the example, head portion 116 includes a pin 120 extending along an axis 130 and having a pin end 126 extending beyond a surface 136. As will be described below, pin 120 is moveable along axis 130. In one example, device 100 includes a RS 232 port, a processor, an analog digital converter, a voltage regulator and a slide resistor in communication with the pin 120.

In one form of operation of tire tread depth accessory device 100, the device 100 is "zeroed" or recalibrated so the pin 120 end 126 is in a known position or linear distance from surface 136. The linear distance from pin end 126 to surface 136 is greater than the tire tread depth to be measured. Pin 120 is then positioned in the groove of a tire tread (not shown) between the upstanding portions of the tread until the surface 136 contacts and rests on the radial, outer surface of the tread. On contact of the pin end 126 with the radial inner surface of the tread (or bottom of the groove) the pin 120 linearly moves inside the head portion 116 to measure the linear depth dimension of the tire tread (the distance between the bottom of the groove and outer surface of the tire tread. Other methods of using pin 120, or other probes, to measure the depth known by those skilled in the art may be used.

One example of measuring or reading the tread depth through movement of the pin 120 includes the pin moving a slide resistor to an intermediate place along a predetermined path of movement. The slide resistor is powered by a stable and known voltage from the internal voltage regulator which in turn is provided power by the tool 12 to the cord 140 and respective communication ports. The intermediate slide resistor voltage resulting from the intermediate position of the pin 120 is converted into a digital value by the analog digital converter. The digital value is processed in the device 100 and transmitted to the tool 12 for display or further processing in the tool 12 or transmitted to other devices further described below. One example of a linear position transducer for electronic measurement generally as described is the Model LT linear position transducer manufactured by Honeywell. It is understood that other devices having one or more of the functions described can be used and can be carried out in the device 100 or in the tool 12 as known by those skilled in the art.

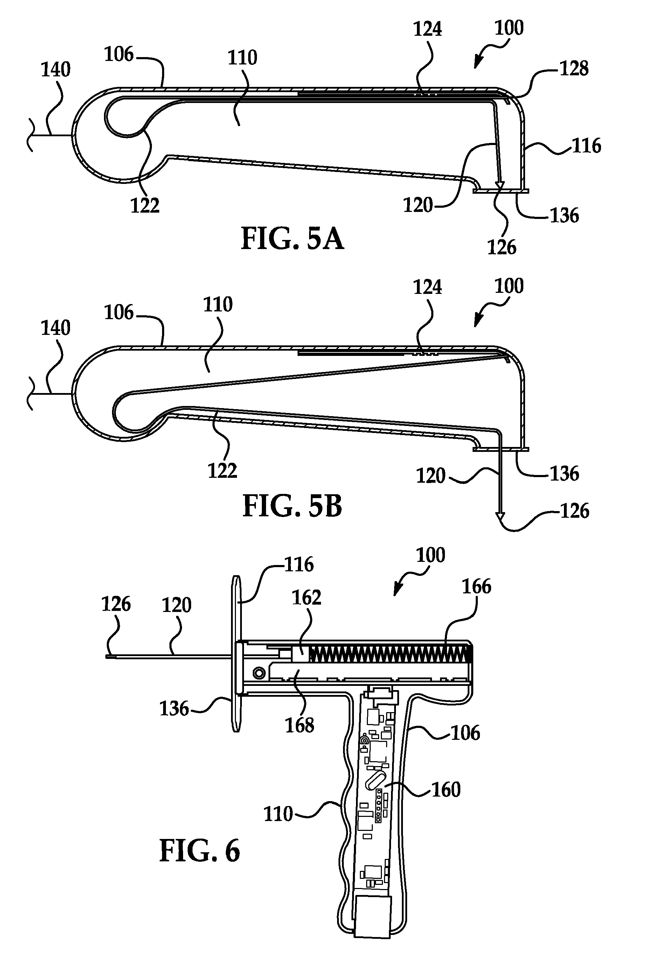

Referring now to Figures 5A and 5B, an example of an accessory measurement device in the form of a tire tread depth measuring device 100 is illustrated. The example shown in Figures 5A and 5B includes measuring spring 122 located within housing 106. Pin 120 with pin end 126 can be formed as part of the spring 122, or can be otherwise attached to form substantially the shape of Figures 5A and 5B. Spring 122 can be biased to either an extended position shown in Figure 5B where pin end 126 is extended from surface 136, or a retracted position shown in Figure 5A where pin end 126 is located near surface 136. Spring 122 can be attached to a transducer, shown in the exemplary form of a strain gauge 124, at attachment point 128 and strain gauge 124 can be fixedly attached to housing 106. Upon movement of spring 122 and pin 120, the strain gauge 124 can be deformed, either under compression or under tension. Tread depth measuring device 100 can measure the electrical conductance or resistance of the gauge, which can be correlated and converted to a linear distance traveled by pin 120 to be relayed to tool 12. Although described as a spring 122, member 122 can take other forms and be made from other materials known by those skilled in the art.

Figure 6 details another example of tire tread depth measuring device 100, wherein pin 120 translates linear movement to a linear slide transducer 168. Figure 6 shows electronics 160 located in handle 110 of housing 106 that are used to measure the resistance change in transducer 168. Pin 120 can attach directly to the transducer at attachment tab 162, and the linear transducer can be mounted parallel to the direction of the travel of pin 120 as shown in Figure 6. Spring 166 may be included in this example, and can bias the system towards a retracted or extended position.

Several other examples are contemplated to translate the linear movement of pin 120 to a transducer that is positioned in an orientation that is not parallel to the pin movement. For example, a linear transducer can be included in the handle 110 portion of device 100. Pin 120 can translate movement to a connecting rod through one or more bearings located in a channel in head portion 116, wherein the channel can comprise an arc of less than 180 degrees. Thus, the bearings would move along the arc within the channel, contacting and pushing the connecting rod in a direction that is not parallel to pin 120 movements. In addition to bearings, other structures in combination with the transducer known by those skilled in the art may be used.

In yet another example, tire tread depth measuring device 100 may include a series of gears and pinions. A pin pinion can be attached to or contain pin 120. As the pin pinion travels with pin 120, it can engage a gear located within the housing 106. The gear or a series of gears can ultimately engage in a transducer pinion. The transducer pinion can translate the rotational movement in gears to linear movement, and the transducer pinion can be attached to transducer to measure a distance traveled as mentioned above. The examples shown and described may also use zeroing or calibration mechanisms or processes described above prior to retraction or extension of pin 120 to identify or track the relative movement of pin 120. It is understood that the transducers described can take many forms, for example linear transducers, strain gauges, slide resistors, inductance devices and other devices known by those skilled in the art.

In the example, tire tread depth measuring device 100 is in electronic communication with tool 12 through a communication port (not shown) in the device 100 for the transfer of data between device 100 and tool 12. In one example, communication between device 100 and tool 12 is through RS232 using respective communication ports in tool 12 and device 100 through a cord 140. It is understood that other communication means including USB ports and cords as well as wireless protocols including Bluetooth and other communication systems known by those skilled in the art may be employed. In the example shown, tool 12 can be in direct or wireless electronic communication with a central device, for example a personal computer 174, to display, process and/or store the data.

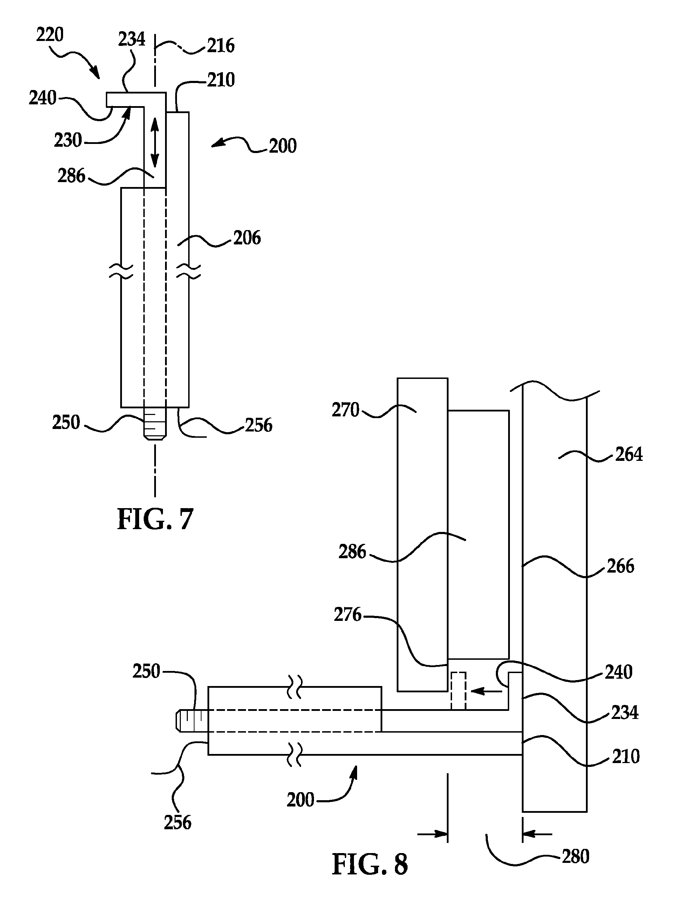

Referring to Figures 7 and 8, examples of system 10 including a brake pad thickness measurement accessory device 200 useable with tool 12 is illustrated. As best seen in the example shown in Figure 7, break pad measuring device 200 includes a housing 206 having an abutment surface 210 defining an axis 216 as generally shown. Device 200 includes a pin or probe 220 having a stem 226 and a head 230 including an upper surface 234 and an opposing contact surface 240 normally extending beyond abutment surface 210 as shown in Figure 7. Pin 220 is moveable along axis 216 upon force applied to head 230. In the example shown in Figure 7, pin 220 extends at least partially into housing 206 and be directly connected to a visual gauge 250. Preferably, device 200 and pin 220 are similarly constructed as the tire tread device 100 described above to convert the measurement described further below into electronic data communicable with tool 12 through cable 256 or wirelessly through protocols described above and as known by those skilled in the art. Therefore, device 200 can translate linear movement of pin 220 to electronic data through an internal measuring spring, the movement of bearings within a housing, or through gears and pinions, examples of which are found described above in the tire tread device 100.

Referring to Figure 8, a preferred application for device 200 for measuring the thickness of a vehicle disc brake pad is shown. In the example, a vehicle brake rotor 264 having an outer surface 266 is shown adjacent to a brake pad support plate 270 having an inner surface 276 defining a linear distance 280. Positioned between the support plate 270 and the rotor 264 is a brake pad 286 connected to support plate 270. In common brake systems, the brake system automatically or self-adjusts the brake pad 286 to be positioned very close to the rotor outer surface 266 such that the distance between the support plate inner surface 276 and the rotor outer surface can be used to measure or gauge the thickness of the pad 286 positioned therebetween (space provided between pad 286 and rotor outer surface 266 shown in Figure 8 for ease of illustration only).

In operation, brake pad measuring device 200 is generally positioned and oriented as shown in Figure 8. The pin 220 and specifically upper surface 234 is placed in contact with the rotor outer surface 266 and forcibly advanced until the pin upper surface 234 is aligned with housing abutment surface 210 which occurs when the abutment surface 210 contacts or bottoms out on the rotor outer surface 266 as generally shown. In a preferred example, the device 200 in an electronic form is "zeroed" or recalibrated and placed in a measuring mode. Pin 220 is thereafter moved outward (to the left in Figure 8) until the contact surface 240 is positioned against the inner support plate surface 276 (shown in phantom) to measure the distance 280, i.e. the thickness of the brake pad 286. The measurement or calculation takes into account the thickness or distance between surfaces 234 and 240 of the head 230. Movement of the pin 220 can be accomplished manually by a lever or tab (not shown) extending from pin 220 and moveable by hand. Alternately, the pin can be electrically moved by an internal motor and gearing (not shown). Other methods known by those skilled in the art may be used. In the preferred example, the linear measurement is accomplished through the linear position transducer construction described above. Other methods, components and functions to obtain or convert the measurement to electronic data for further use known by those skilled in the art may be used. In a simple construction, or in combination with the electronic features, a visual gauge 250 may be observed.

In applications where the vehicle brake systems do not have self-adjusting features, known or estimated distances between the rotor 264 and the brake pad 286 can be applied to the calculation for an accurate reading. These distances or factors may be prestored in the tool 12 or accessible by the tool 12 from a remote location through common electronic communication devices and methods, for example Bluetooth and similar protocols known by those skilled in the art.

In a preferred operation, brake pad measuring device 200 electronically sends the generated or converted signal including the measurement data to the tool 12 through cable 256 or wirelessly as described above for device 100. Device 200 may include a visual display on the device 200 itself or, depending on the sophistication of tool 12, may visually display the data on tool visual display 34. Tool 12 can further process, store or transfer the data in tool 12 for a predetermined period or may be transferred to an central processing or storage device, for example personal computer 174 described below.

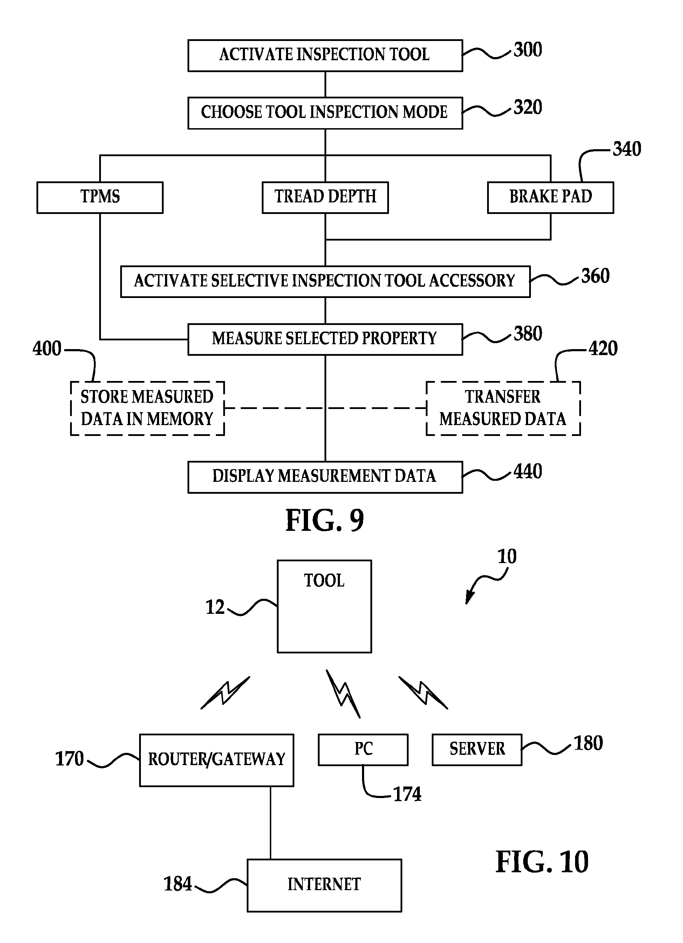

The exemplary measuring accessories 100 and 200 useable with tool 12 are also shown useable with a remote device, for example a personal computer 174, so the accessories 100, 200 and tool 12 can communicate between each other and, if desired, with remote devices such as personal computers and other devices further described in Figure 10 below.

In an alternate example not shown, the tool 12 is operable to wirelessly receive and process signals from onboard vehicle sensors for reading or gauging the levels of critical fluids in vehicles, for example engine oil, transmission fluid, radiator coolant fluid and other fluids vital to vehicle operation known by those skilled in the art. In an example, the sensors installed and operational on a vehicle, for example those in communication with the vehicle electronic control unit (ECU) wirelessly emit data signals, or alternately are awakened/activated like a TPMS sensor by the tool 12, including data reflecting the level of the fluid presently in the vehicle. The tool 12 would wirelessly receive and process that information through known communication protocols and output or display corresponding information useful to a technician. An alarm or signal reflecting fluid in an acceptable range or a condition requiring service could be output by tool 12 for the technician. Other components, methods or processes to read or measure vehicle fluids known by those skilled in the art may be used.

Referring to Figure 9, examples of the process of operation of inspection device and system 10 is illustrated. In the example, when a vehicle is brought into a vehicle service center and the service center desires to check the conditions of the tires and brake system, system 10 can quickly and easily be deployed.

In one example, the system 10 tool 12 is activated through a power on switch in step 300. In step 320, where tool 12 includes a visual display 34, the technician can bring up or access through manipulation of the keypad buttons 46 or through a touch screen a suitable functional menu on the display and select the function or measurement desired. In one example, the tool 12 includes audio and/or visual instructions on the proper procedures to use the tool 12 and, for example accessories 100 and 200, to obtain the desired data for technicians and end users. In one example the tool 12 provides instructions how to connect and use each accessory 100 and 200.

In other examples, troubleshooting instructions may provide predetermined instructions and guidance to resolve scenarios where the system 10 is not successfully sending or receiving data from the TPMS sensor or electronic control unit. In the example, a user accesses the stored troubleshooting data from the tool memory that is particular to the problem experienced with the system 10. An index or available troubleshooting data and procedures may be included.

Tool 12 may further have stored data in memory 86 which includes numerical data on vehicle component parameters for particular vehicles and acceptable ranges therefore. For example, tool 12 may store in memory the recommended tire pressures, minimum recommended tire tread depth and minimum brake pad thickness for a particular model of vehicle. This stored data can be recalled from the tool memory for reference against the measured data or, depending on the sophistication of the tool 12, can be programed to automatically be recalled and displayed for visual comparison by the technician to quickly identify if the measure data falls within acceptable ranges. Alternately, the tool 12 could communicate with a separate device, for example a personal computer 174, to recall reference data stored in the personal computer for visual display and comparison on the tool 12. It is understood that additional method steps, memory, online connection and processor configurations and access protocols for the stored troubleshooting data known by those skilled in the art may be used.

In the example system 10 for measuring of TPMS, tire tread depth and brake pad thicknesses, in step 340 the technician can select one of these predetermined and stored options in tool 12. In step 360, the appropriate accessory for the selected measurement function, for example the tire tread depth accessory 100, is physically connected to tool 12 through cord 140 or otherwise electronically connected and synchronized with the tool 12 where wireless communication protocols are enabled.

Using the selected accessory 100 or 200, or the TPMS measurement system internal to tool 12, step 380 includes measurement of the selected tire or brake property, for example tire tread depth of one or more of the vehicle tires, is made. Depending on the selected measurement data selected, it may be common to take multiple measurements or data points from the vehicle. For example, to obtain a highly accurate reading of tread depth, it may be advisable to take multiple tread depth measurements on several places of the same tire on all four tires (and a much higher number of tires for over the road tractor trailer trucks). In such instances, the tool 12 (or device 100) may temporarily store each measurement data point taken for further use in step 400. As explained, the measured data may initially be stored in the accessory, or immediately be communicated to tool 12 for temporary or semi-permanent storage. In an alternate step 420, the data may be transmitted directly to the tool 12 or other devices such as a personal computer or other data repository at the service center described further below.

In a preferred method, in step 440 the measured data is transmitted to the tool 12 and displayed on the visual display 34 of tool 12 for easy visual identification by a technician.

Tool 12 can include predetermined and stored graphic displays suitable for the system 10 accessory or internal TPMS measurement systems, so the measured data can be examined and evaluated by the technician to determine if the vehicle tires or brakes are operating within acceptable conditions or whether, for example, the brake pads are significantly worn and should be replaced.

When the initially selected measurement has been completed, a technician can select the next desired measurement and conduct that inspection using tool 12 and the appropriate accessory as described above until all desired inspections are complete.

Referring to Figure 10, an example of inspection system 10 allows tool 12 to communicate wirelessly to receive and/or download electronic data from a peripheral device or the internet to update or upgrade the programmable software or retrieve protocol or data information to be stored in memory 86 or processor/controller 80/76 in tool 12. It can also be used to send feedback information such as error or validation information from the tool 12 to a remote server.

In the example shown in Figure 10, the tool 12 is equipped with hardware and software for wireless communication through one of the conventional wireless protocols, for example Bluetooth, Wi-Fi, GSM or any other wireless communication network. The tool 12 is placed in electronic communication with a router 170 in communication with the internet 184, or PC 174 or server 180, to wirelessly receive data from these devices for storage of the data in the tool 12 or in related memory extension(s). In one example, the tool software automatically searches for updates at regular intervals, for example, once per day or week. In an alternate example, a technician user may manually initiate a search and download available updates stored on a server or PC or directly from the internet. In another example, after reading information from defective TPM sensor, the tool 12 can automatically download from the internet relevant program data to clone a new programmable TPM sensor in accordance with defective sensor information. Online access has the double advantage of always providing the most up-to-date available information and accessing to unlimited memory size without the need of large internal memory space.

The present invention 10 increases the capability of prior hand-held devices which were primarily used or limited to checking certain tire conditions through TPMS systems. The present invention 10 through use of accessory devices and improved features and functions of the base tool 12, greatly increases the functionality and performance of the tool 12 and system 10 allowing technicians to quickly and easily measure critical vehicle parameters in tires and brake systems which provides benefits to the vehicle owner and vehicle service facilities. It is understood that the described system 10 may have other applications beyond use in enclosed service centers or garages and may be used out in the field for inspections of vehicles or other devices out on the road where it is not convenient for the vehicle to travel to a brick and mortar service center.

While the invention has been described in connection with what is presently considered to be the most practical and preferred embodiment, it is to be understood that the invention is not to be limited to the disclosed embodiments but, on the contrary, is intended to cover various modifications and equivalent arrangements included within the spirit and scope of the appended claims, which scope is to be accorded the broadest interpretation so as to encompass all such modifications and equivalent structures as is permitted under the law.

## Claims

1. A vehicle inspection system for use in measuring predetermined conditions of vehicle equipment, the inspection system comprising:
a portable tool having a housing and defining a front face, the tool having a power source, a programmable processor, a memory, software stored in the memory and antennas for wirelessly sending and receiving electronic data to at least one of a distant tire pressure monitoring system (TPMS) sensor connected to a vehicle wheel; and
at least one measurement accessory device for measuring a preselected vehicle equipment condition, the accessory device is in electronic communication with the portable tool for transmission of data measured by the accessory device to the portable tool.

2. The vehicle inspection system of claim 1 wherein the at least one measurement accessory comprises a tire tread depth measuring device for use in measuring the depth of tire tread on a tire of a vehicle.

3. The vehicle inspection system of claim 2 wherein the tire tread depth measuring device is configured to contact an outer tread radial surface and an inner tread radial surface.

4. The vehicle inspection system of claim 3 wherein the tire tread depth measuring device further comprises a head portion with a fixed surface and a pin, wherein the pin can move relative to the fixed surface of the head portion along an axis substantially perpendicular to the surface.

5. The vehicle inspection system of claim 4 further comprising a transducer to convert the position of the pin relative to the head portion into a digital value.

6. The vehicle inspection system of claim 1 wherein the at least one measurement accessory comprises a brake pad thickness measuring device for use in measuring the linear thickness of a brake pad of a vehicle.

7. The vehicle inspection system of claim 6 wherein the brake pad thickness measuring device is configured to contact an outer surface of a brake rotor and an inner surface of a brake pad support.

8. The vehicle inspection system of claim 7 wherein the brake pad thickness measuring device further comprises a housing having an abutment surface and a probe, wherein the probe can move relative to the abutment surface of the housing along an axis substantially perpendicular to the abutment surface.

9. The vehicle inspection system of claim 1 wherein the electronic data the portable tool receives from the at least one TPMS sensor comprises at least one of a tire air pressure and a tire air temperature.

10. The vehicle inspection system of claim 1 wherein the portable tool further comprising a visual display screen, the inspection system operable to selectively display the data measured by the accessory device.

11. The vehicle inspection system of claim 1 wherein the portable tool is configured to wirelessly receive signals from at least one vehicle sensor for reading or gauging the levels of at least one fluid stored in the vehicle.

12. A method of taking a plurality of measurements on preselected components of a vehicle, the method comprising the steps of:
activating an inspection tool;
selecting a first vehicle component parameter to be measured;
activating an accessory tool to measure the first selected vehicle component parameter, the accessory tool in electronic communication with the inspection tool; and
measuring the selected parameter and transmitting the measured data to the inspection tool for display to a user.

13. The method of claim 12 wherein a second component parameter defined by a TPMS sensor mounted to a vehicle wheel is to be measured, the method comprising the step of the inspection tool reading the TPMS second component parameter.

14. The method of claim 12 wherein measuring the first selected vehicle component parameter comprises measuring at least one of a tire tread depth or a brake pad thickness.

15. The method of claim 12 further comprising the step of reading vehicle identification indicia to identify the specific vehicle that the plurality of measurements are to be taken.
